# EUROPÄISCHE PATENTSCHRIFT

(11) **EP 2 679 950 B1**
(45) Veröffentlichungstag und Bekanntmachung des Hinweises auf die Patenterteilung: **18.01.2017**
(21) Anmeldenummer: 13170400.9
(22) Anmeldetag: 04.06.2013
(51) Int. Cl.: G01B 11/10, A24C 5/34

(54) **Vorrichtung und Verfahren zur Bewertung einer Stirnfläche eines stabförmigen Produkts der Tabak verarbeitenden Industrie**
Device and method for evaluating a front surface of a rod-shaped product of the tobacco processing industry
Dispositif et procédé d'évaluation d'une surface frontale d'un produit en forme de tige de l'industrie de traitement du tabac

(30) Priorität: 14.06.2012 DE 102012210031
(43) Veröffentlichungstag der Anmeldung: 01.01.2014
(73) Patentinhaber: Hauni Maschinenbau GmbH, 21033 Hamburg (DE)
(72) Erfinder: Gast, Hanno, 21077 Hamburg (DE); Straube, Peter, 21035 Hamburg (DE); Gansewig, Alexander, 21031 Hamburg (DE); Folger, Manfred, 21035 Hamburg (DE)
(74) Vertreter: Müller Verweyen

(56) Entgegenhaltungen:
- EP-A1- 0 370 231
- EP-A2- 0 634 112
- EP-B1- 0 630 586
- DE-A1- 19 921 725

## Beschreibung

Die Erfindung betrifft eine Vorrichtung zur Bewertung einer Stirnfläche, insbesondere Schnittfläche eines stabförmigen Produkts der Tabak verarbeitenden Industrie, umfassend einen optischen Sensor und eine elektronische Signalverarbeitungseinrichtung. Die Erfindung betrifft zudem ein Verfahren zur Bewertung einer Stirnfläche, insbesondere Schnittfläche eines queraxial geförderten stabförmigen Produkts der Tabak verarbeitenden Industrie.

Herkömmlich wird die Qualitätsüberwachung der Stirnfläche von Filter- und Brandende einer Zigarette sowie von Filterstäben subjektiv durch den Betrachter durchgeführt. Dabei wird die zu bewertende Stirnfläche mit dem bloßen Auge betrachtet und anschließend aufgrund der Erfahrungen des Betrachters bewertet. Das Ergebnis der Bewertung hängt stark vom subjektiven Eindruck und den Erfahrungen des einzelnen Betrachters ab. Dadurch ist ein Vergleich unterschiedlicher Bewertungen nicht möglich. Dies führt in einigen Fällen, wie beispielsweise bei der Optimierung der Schneidapparatur oder der Endabnahme einer Maschine, zu Problemen. Neben dem subjektiven Empfinden, ob eine Stirnfläche qualitativ gut oder mangelhaft ist, kann insbesondere kein reproduzierbares Maß für die Verbesserung der Stirnfläche durch Optimierungen an der Produktionsmaschine definiert werden.

Die EP 0 585 686 B1 offenbart eine optische Vorrichtung zur Überprüfung der Füllung von Zigaretten, die eine die Stirnfläche einer Zigarette beleuchtende Lichtquelle, eine fokussierende Linse mit festem Fokus und einen Detektor aufweist. Die Fokusebene der Linse ist auf eine Endkante der Zigarette gerichtet. Der Sensor ist zur Ermittlung des Kontrastes des von der Linse auf den Sensor fokussierten Bildes der Zigarettenstirnfläche eingerichtet. Bei optimal gefüllter Zigarette ist der detektierte Kontrast maximal. Wenn das Kontrastsignal unter eine vorbestimmte Schwelle fällt, wird ein Ausschusssignal ausgegeben.

Eine ähnliche Prüfvorrichtung dieser Art ist aus der EP 0 630 586 B2 bekannt. In einer Ausführungsform umfasst die optische Vorrichtung zwei fokussierende Linsen mit unterschiedlichem festem Fokus und zwei entsprechenden Detektoren, wobei die Fokusebenen relativ zu der Endkante der Zigarette versetzt sind. Das von der Stirnfläche einer Zigarette reflektierte Licht wird mittels eines halbdurchlässigen Spiegels und der beiden Linsen auf beide Detektoren fokussiert. Die Signale der beiden Detektoren werden einem Differenzglied zugeführt. Wenn die Differenz der beiden Signale einen vorgegebenen Wert überschreitet, wird ein Ausschusssignal ausgegeben. In einer weiteren Ausführungsform wird die Endkante einer Zigarette miterfasst und die gemessene Helligkeitskurve wird mit einer gespeicherten Soll-Helligkeitskurve verglichen. Das Ausgangssignal dieses Vergleichs ist ein Maß für eine axiale Verschiebung der Zigarette und gestattet eine entsprechende Kompensation der Messung.

Aus der EP 1 099 388 A2 ist ein Off-Line-Prüfapparat zum Detektieren des Vorhandenseins von Tabak am Brandende einer Zigarette auf der Grundlage einer Infrarot-Transmissionsmessung bekannt. Auf einer Trommel werden Zigaretten an einer Tabakdetektionseinrichtung mit einer Infrarotquelle vorbeigeführt, die einen axial in die Zigarette an deren Brandende gerichteten Infrarotstrahl emittiert. Die radial aus der Zigarette austretende Infrarotstrahlung wird von vier um den Umfang der Zigarette angeordneten Infrarotdetektoren aufgenommen. Sofern die Intensität der durch das Brandende der Zigarette transmittierten Infrarotstrahlung einen voreingestellten Schwellwert nicht überschreitet, wird die Zigarette als akzeptabel eingestuft.

EP 0 704 172 B1 offenbart eine Vorrichtung zum Inspizieren eines kreisförmigen Objekts, insbesondere der Stirnseite eines stabförmigen Produkts, für eine Maschine der Tabak verarbeitenden Industrie, mittels einer auf das Objekt fokussierten Kamera, wobei fehlerhafte Objekte wie abstehender Papierrand (flag), Lücke zwischen Fasermaterial und Papier (bypass) oder verfärbte Regionen bzw. Flecken mittels Bildverarbeitung identifiziert werden.

Gemäß der EP 1 053 942 B1 wird der Lichtstrahl eines Lasers über eine Linse aufgeweitet und mittels einer Blende ein strukturiertes flächiges Lichtmuster erzeugt, das auf einen Zigarettenkopf fokussiert wird. Eine Linse fokussiert das reflektierte Licht auf einen positionsempfindlichen Detektor. Vom Detektor empfangenes reflektiertes Licht ist in einem von Null verschiedenen Winkel zum bestrahlenden Licht angeordnet. Die Blende umfasst eine größere Öffnung zur Ausleuchtung eines zentralen Bereichs einer Stirnfläche eines Zigarettenkopfs und einen konzentrisch um die größere Öffnung angeordneten Kranz von kleineren Öffnungen zum Beleuchten der Stirnseite des Zigarettenpapiers. Aus einer Verschiebung des von der größeren Öffnung erzeugten Lichtflecks auf dem Detektor relativ zu dem Kranz aus von der kleineren Öffnungen erzeugten Lichtpunkten kann beispielsweise auf eine fehlende Tabakfüllung am Zigarettenkopf geschlossen werden, was zum Auswurf der Zigarette führt. Bei einem Formatwechsel muss je nach Zigarettendurchmesser die Blende ausgewechselt werden, was umständlich und fehleranfällig ist. Zudem kann schon eine geringe Fehlpositionierung des eingestrahlten Lichtmusters relativ zu dem Zigarettenkopf zu einem falschen Messergebnis führen, was entweder den Ausschuss fehlerfreier Zigaretten oder die Akzeptanz fehlerhafter Zigaretten bedeutet.

Eine ähnliche Prüfvorrichtung ist aus der EP 1 176 092 B1 bekannt. Hier wird jeder Zigarettenkopf mit einem aus drei überlagerten Kreisen gebildeten, die zu untersuchende Stirnfläche teilweise ausleuchtenden Lichtmuster bestrahlt. Zusätzlich zu der erforderlichen genauen Positionierung der ebenfalls vorgesehenen Blende relativ zu den Zigarettenköpfen ist hier noch eine Mehrzahl von Einzellichtquellen zur Erzeugung des Lichtmusters vorgesehen, die sowohl relativ zueinander als auch relativ zu der Blende exakt positioniert sein müssen, um ein fehlerfreies Messergebnis zu erhalten. Die Erzeugung des Lichtmusters in jeder einer Zigarette entsprechenden Blendenöffnung ist zudem äußerst aufwändig. Im Ergebnis wird lediglich ein Gut- bzw. Schlechtsignal bereitgestellt.

Die Aufgabe der Erfindung besteht darin, eine Vorrichtung und ein Verfahren anzugeben, die mit geringem Aufwand genaue quantitative Werte bereitstellen, um eine detaillierte Bewertung der Qualität einer Stirnfläche eines stabförmigen Produkts zu ermöglichen.

Die Erfindung löst diese Aufgabe mit den Merkmalen der unabhängigen Ansprüche. Die dreidimensionale Vermessung des Oberflächenprofils ermöglicht die quantitative Ermittlung von Abständen bzw. Entfernungen der gemessenen Stirnfläche in axialer Richtung. Auf diese Weise kann ein quantitatives Oberflächenprofil mit Tiefeninformation der gesamten Stirnfläche des stabförmigen Produkts mit einer Vielzahl von Datenpunkten erhalten werden, was äußerst detaillierte Aussagen über die Produktqualität ermöglicht. Zur Bewertung der Qualität der Stirnfläche oder Schnittfläche ist die Signalverarbeitungseinrichtung erfindungsgemäß zur Ermittlung des Winkels der Stirnfläche und/oder des positiven / negativen Überstands von Fasern relativ zu der Stirnfläche eingerichtet. Durch diese Bewertung ist es möglich, unterschiedliche Stirnflächen reproduzierbar und quantitativ miteinander zu vergleichen und so beispielsweise Maßnahmen zur Optimierung zu bewerten oder Kriterien für eine Endabnahme nachzuweisen. Erfindungsgemäß können Stirnflächen und insbesondere Schnittflächen auch ohne Referenzproben nach einem einheitlichen Standard bewertet werden.

Die Erfindung ist insbesondere für die Bewertung der Stirnflächen von Filterstäben vorteilhaft. Andere Anwendungen betreffen beispielsweise die Stirnflächenbewertung von Tabakstöcken oder Zigaretten.

Der Winkel der Stirnfläche wird vorzugsweise als Neigung einer an das Oberflächenprofil des stabförmigen Produkts angepassten Ebene bestimmt. Die Ebene wird dabei an einen Teil oder das gesamte Oberflächenprofil eines Füllmaterials des stabförmigen Produkts, oder an das gesamte Oberflächenprofil des stabförmigen Produkts, angepasst. Die Berücksichtung des Füllmaterials ist gegenüber einer Winkelbestimmung, die im Wesentlichen oder nur auf der Ermittlung der Stirnkante eines Hüllmaterials des stabförmigen Produkts beruht, bevorzugt, da es aufgrund der Messfehler am Rand und der begrenzten Auflösung des Sensors schwierig ist, das Hüllmaterial vom Füllmaterial zu unterscheiden.

Die Ermittlung des positiven / negativen Überstands von einzelnen Fasern des Füllmaterials relativ zu der Stirnfläche erlaubt wesentlich genauere Aussagen über die Qualität der Stirnfläche als bisher.

Um eine umfassendere Bewertung der Qualität der Stirn- bzw. Schnittfläche zu ermöglichen, ist die Signalverarbeitungseinrichtung vorzugsweise zur Ermittlung weiterer Bewertungskriterien eingerichtet. Ein vorteilhaftes Kriterium ist die Ovalität des Umfangs der Stirnfläche. Ein anderes vorteilhaftes Kriterium sind Ausrisse oder Fransen eines Umhüllungsstreifens des stabförmigen Produkts. Ein weiteres vorteilhaftes Kriterium ist der Rauhigkeitskennwert eines Teils oder der gesamten Stirnfläche einschließlich des Füllmaterials, wobei Fasern unterschiedlicher Länge mit unterschiedlicher Gewichtung eingehen. Denkbar ist hier auch ein anderes geeignetes Maß für die Rauhigkeit der Stirnfläche.

Zur dreidimensionalen Vermessung des Oberflächenprofils sind verschiedene Sensoren geeignet. Vorzugsweise ist der Sensor ein optischer Distanzsensor, der zur Überstreichung der gesamten zu untersuchenden Stirnfläche des stabförmigen Produkts eingerichtet ist. Die bevorzugte Verwendung eines Triangulationssensors, d.h. eines auf Triangulation beruhenden Distanz- bzw. Wegmesssensors ermöglicht die quantitative Ermittlung von Abständen der gemessenen Stirnfläche in axialer Richtung. Die Erfindung ist aber nicht auf einen Triangulationssensor beschränkt. Der Sensor kann beispielsweise auch ein 3D-fähiges Kamerasystem sein.

In einer bevorzugten Ausführungsform ist der Sensor ein zweidimensionaler optischer Distanz- bzw. Wegmesssensor, wobei die Strahlungsquelle zur Erzeugung eines Strahlungsfächers eingerichtet ist, um eine linienförmige Abtastung der Stirnfläche des stabförmigen Produkts durchzuführen, und wobei zur flächigen Abtastung der Stirnfläche des stabförmige Produkts der Distanz- bzw. Wegmesssensor und die Stirnseite des stabförmigen Produkts relativ zueinander bewegbar sind. Mittels eines zweidimensionalen optischen Wegmesssensors kann die Messdauer pro stabförmigem Produkt, und damit die Gesamtmessdauer, erheblich reduziert werden. In dieser Ausführungsform ist die Ausdehnung bzw. Breite des Strahlungsfächers am Ort der zu untersuchenden Stirnfläche vorzugsweise größer ist als der größte Durchmesser der zu untersuchenden Stirnfläche, so dass zur vollständigen Überstreichung der Stirnfläche eine Bewegung des Sensors relativ zu der Stirnfläche in einer Richtung ausreichend ist.

In einer anderen Ausführungsform ist der Sensor ein eindimensionaler optischer Distanz- bzw. Wegmesssensor, wobei die Strahlungsquelle zur Erzeugung eines Lichtstrahls eingerichtet ist, um eine punktförmige Abtastung der Stirnfläche des stabförmigen Produkts durchzuführen, und wobei zur flächigen Abtastung der Stirnfläche des stabförmige Produkts der Distanz- bzw. Wegmesssensor und die Stirnseite des stabförmigen Produkts in zwei zueinander senkrechten Richtungen relativ zueinander bewegbar sind. Diese Ausführungsform kann beispielsweise unter Kostengesichtspunkten bevorzugt sein.

Im Allgemeinen ist daher der Sensor vorzugsweise ein ein- oder zweidimensionaler optischer Wegmesssensor, wobei zur flächigen Abtastung der Stirnfläche des stabförmigen Produkts der Wegmesssensor und die Stirnseite des stabförmigen Produkts relativ zueinander bewegbar sind. Dies kann durch Bewegung des Sensors und/oder durch Bewegung des stabförmigen Produkts erfolgen. In einer bevorzugten Ausführungsform umfasst die Vorrichtung einen Manipulator zur Bewegung des stabförmigen Produkts relativ zu dem Sensor während der Messung.

Die Erfindung wird im Folgenden anhand bevorzugter Ausführungsformen unter Bezugnahme auf die beigefügten Figuren erläutert. Dabei zeigt:
- Fig. 1: eine schematische Ansicht einer erfindungsgemäßen Vorrichtung;
- Fig. 2, 3:: Draufsichten auf die zu untersuchenden Stirnseite des Produkts zur Illustration des Abtastvorgangs für einen zwei- bzw. eindimensionalen Wegmesssensor;
- Fig. 4, 5:: schematische Messdiagramme für ein intaktes Produkt und ein stabförmiges Produkt mit einem Schiefschnitt;
- Fig. 6:: gemessenes dreidimensionales Profil der Stirnseite eines Filterstabes;
- Fig. 7-9:: schematische Darstellungen verschiedener zu ermittelnder Qualitätskriterien; und
- Fig. 10: ein schematisches Ablaufdiagramm für die Ermittlung einer Rauhigkeitskennzahl.

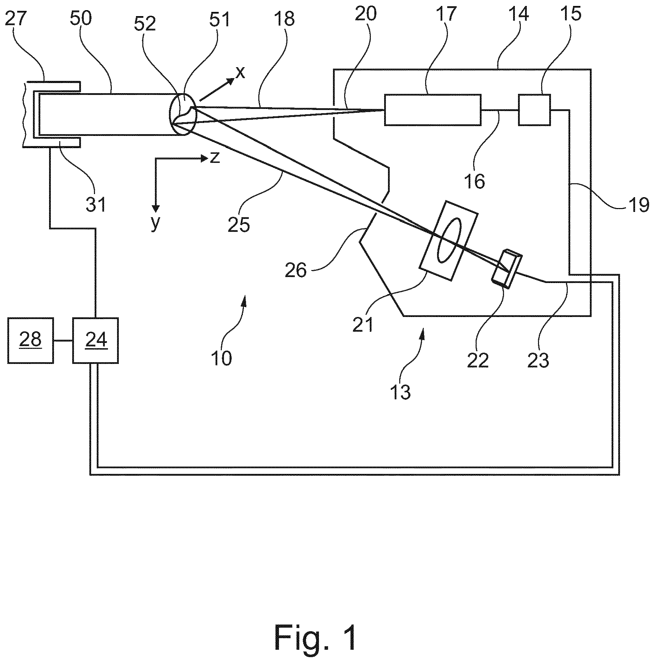

Die in Fig. 1 gezeigte Vorrichtung 10 zur Bewertung der Qualität einer Stirnfläche oder Schnittfläche eines stabförmigen Produkts der Tabak verarbeitenden Industrie, insbesondere eines Filterstabs, einer Zigarette oder eines Tabakstocks. Die Vorrichtung 10 umfasst einen optischen Wegmess-Sensor 13 und eine in Fig. 1 nur schematisch gezeigte Signalverarbeitungs-und Steuereinrichtung 24 zur Steuerung der Messvorrichtung 10 und zur Auswertung der von dem Sensor 13 aufgenommenen Messsignale. Die Vorrichtung 10 umfasst vorzugsweise einen Manipulator 27 zur Handhabung eines zu untersuchenden stabförmigen Produkts 50. Die Vorrichtung 10 ist insbesondere ein Labor- bzw. Offlinegerät. Die Signalverarbeitungs- und Steuereinrichtung 24 kann beispielsweise ein Computer sein und ist zweckmäßigerweise mit einem Bedien-/Anzeigeterminal 28 verbunden.

Der Sensor 13 ist wie folgt aufgebaut. In dem Sensorgehäuse 14 ist eine einen Lichtstrahl 16 erzeugende, über eine Leitung 19 versorgte Lichtquelle 15 vorgesehen. Die Lichtquelle 15 ist vorzugsweise eine Laserlichtquelle, insbesondere ein Halbleiterlaser, beispielsweise eine Laserdiode. Das Intensitätsmaximum liegt vorzugsweise im sichtbaren Bereich, aber auch Infrarotbereich ist denkbar. Vorzugsweise enthält der Sensor 13 ein Strahlaufweitungselement 17, insbesondere eine zylindrische Linse, zur Aufweitung des Lichtstrahls 16 in einen zweidimensionalen Lichtfächer 18. Der Lichtfächer 18 kann auch auf andere Weise erzeugt werden.

Der Lichtfächer 18 tritt durch ein Austrittsfenster 20 aus dem Sensor 13 aus und fällt auf die zu vermessende Oberfläche bzw. Stirnfläche, insbesondere die Stirnseite 51 am Kopfende eines stabförmigen Produkts 50, und erzeugte dort eine Linie 52, nämlich die Stirnlinie der Ebene des Strahlfächers 18 mit der zu vermessenden Oberfläche 51. Das von der Oberfläche 51 reflektierte Licht wird sodann über ein in dem Gehäuse 14 vorgesehenes Eintrittsfenster 26 mittels eines in dem Sensor 13 enthaltenden, insbesondere zweidimensionalen Linsensystems bzw. Objektivs 21 auf dem Strahlungsdetektor 22 abgebildet, der insbesondere als zweidimensionaler Detektor bzw. Flächendetektor ausgebildet ist. Die mittels des Strahlungsdetektors 22 detektierte Bildinformation wird über eine Signalleitung 23 an die Signalverarbeitungseinrichtung- und Steuereinrichtung 24 ausgegeben.

Aufgrund des Winkels zwischen der einfallenden Strahlung (Strahlungsfächer 18) und der reflektierten Strahlung 25 kann der genaue longitudinale Abstand jedes Punktes auf der Linie 52 zu einem entsprechenden Referenzpunkt, und damit das genaue Profil der Linie 52 mittels Triangulation quantitativ bestimmt werden. Longitudinal bedeutet dabei entlang der Richtung der einfallenden Strahlung 18 (hier die z-Richtung), genauer entlang der Richtung der Mittelachse der einfallenden Strahlung 18, oder alternativ in Richtung der Längsachse des stabförmigen Produkts 50. Auf dem Strahlungsdetektor 22 wird daher die Form der Linie 52, und damit das Oberflächenprofil der Oberfläche 51 in dem betreffenden Querschnitt, in quantitativer Weise abgebildet.

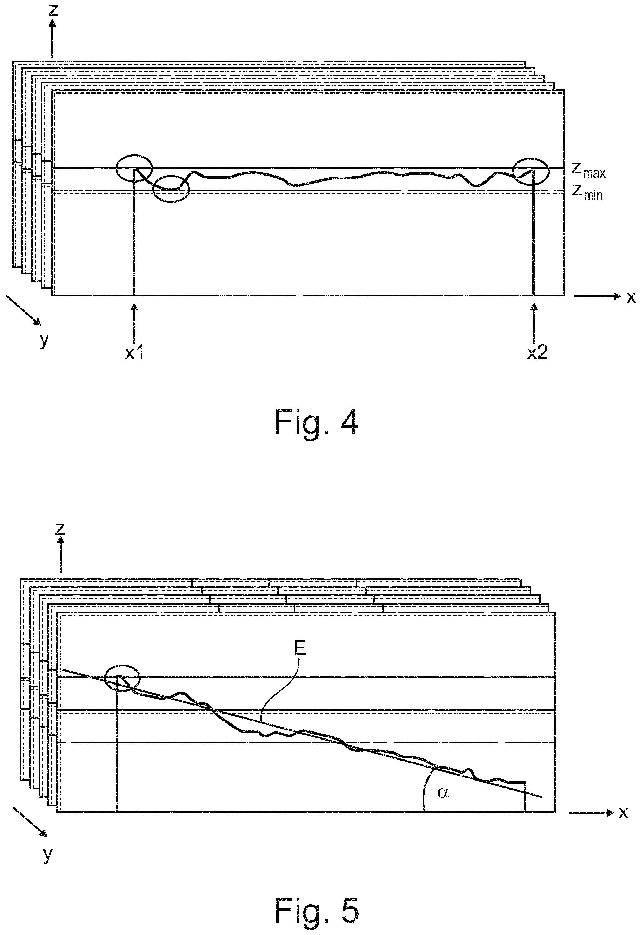

Der Sensor 13 ist vorzugsweise zur Erzielung einer Ortsauflösung von 0,1 mm oder darunter, vorzugsweise von 0,02 mm oder darunter, eingerichtet, so dass pro Messkurve (siehe Fig. 4) vorzugsweise mindestens 100, weiter vorzugsweise mindestens 500 Messpunkte zur Verfügung stehen. Ortsauflösungen deutlich unterhalb von 0,1 mm mit mehreren hundert Messpunkten pro Messkurve sind bei Bedarf problemlos erzielbar.

Der Winkel zwischen der einfallenden Strahlung (Strahlungsfächer 18) und der reflektierten Strahlung 25 liegt vorzugsweise zwischen 20° und 70° und zur Erzielung einer höheren Genauigkeit vorzugsweise zwischen 30° und 60°.

Der Manipulator 27 umfasst einen Greifer 31, mit dem ein stabförmiges Produkt 50 gegriffen und unverlierbar gehalten werden kann. Der Greifer 31 kann beispielsweise zwei mit Längsausnehmungen versehene Backen aufweisen, zwischen denen das zu untersuchende stabförmige Produkt 50 eingespannt ist und die zu diesem Zweck relativ zueinander verstellbar sein können. Andere Arten von bewegbaren Aufnahmen einer Handhabungseinrichtung und/oder eines Fördermittels für das stabförmige Produkt sind möglich, insbesondere sind hier eine Fördertrommel, welche insbesondere als Muldentrommel ausgebildet ist, ein Förderband oder eine Förderkette genannt, welche zweckmäßigerweise Aufnahmemulden, vorzugsweise Saugmulden, für das stabförmige Produkt aufweisen können. Der Manipulator 27 ist vorzugsweise zur Bewegung der Stirnfläche 51 in einer Richtung senkrecht zu der Längsachse des stabförmigen Produkts 50 eingerichtet. Zu diesem Zweck kann beispielsweise ein nicht gezeigter Linearantrieb vorgesehen sein, mit dem die Stirnfläche 51 in einer Richtung senkrecht zu der Linie 52 (hier y-Richtung) verschiebbar ist. Alternativ kann beispielsweise ein Schwenkantrieb vorgesehen sein, mit dem der Greifer 31 um eine horizontale Achse (hier x-Achse) schwenkbar ist. Andere Möglichkeiten sind denkbar.

Zu Beginn der Messung wird die Stirnseite 51 am Kopfende der Zigarette 50 dem Sensor 13 präsentiert. Zur Durchführung der eigentlichen Messung wird der Sensor 13 in Betrieb genommen und die Stirnseite 51 am Kopfende der Zigarette 50 wird vollständig abgetastet. Zu diesem Zweck werden die Zigarette 50 und der Sensor 13 relativ zueinander in einer Richtung senkrecht zu dem Strahlfächer 18, hier beispielsweise in vertikaler Richtung, bewegt, damit der Strahlfächer 18 bzw. die Linie 52 die gesamte Stirnseite 51 der Zigarette vollständig überstreicht. Die Relativbewegung zwischen Zigarette 50 und Sensor 13 während der Messung kann vorzugsweise durch vertikale Verschiebung des Greifers 31, oder dessen Schwenkung um eine horizontale Achse, bewirkt werden. Alternativ ist beispielsweise auch eine Schwenkung oder Verschiebung des Sensors 13 möglich. Nach jedem Schritt oder während der zuvor geschilderten Relativbewegung zwischen Zigarette 50 und Sensor 13 wird eine Messkurve wie die beispielsweise in Fig. 4 gezeigte aufgenommen. Alternativ zu dem beschriebenen schrittweisen Bewegen ist auch ein kontinuierliches Bewegen des Manipulators oder anderen Handhabungseinrichtung möglich.

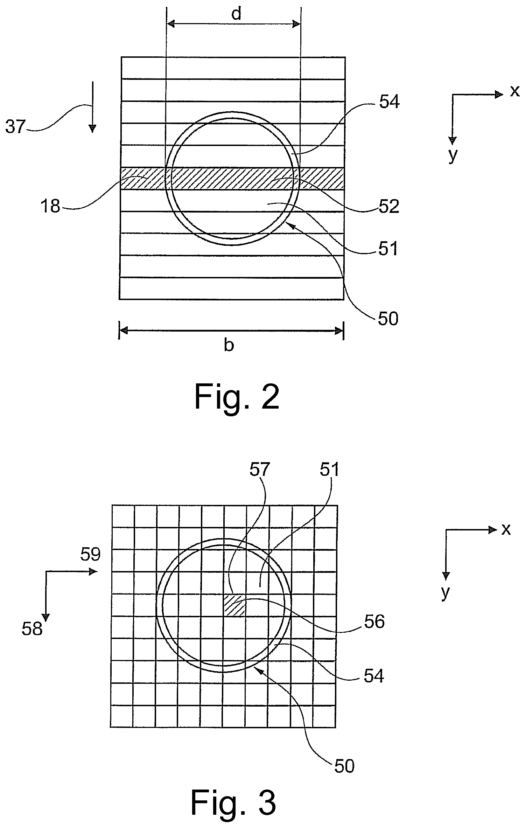

Die Abtastbewegung wird im Folgenden anhand der Fig. 2 genauer erläutert. Fig. 2 betrifft Ausführungsformen mit einem zweidimensionalen Wegmesssensor 13 mit einem Lichtfächer 18 wie in Fig. 1 gezeigt. In Fig. 2 ist der Lichtfächer 18 im Querschnitt am Ort der zu untersuchenden Stirnfläche 51 durch ein schraffiertes Rechteck illustriert. Die Ausdehnung b des Lichtfächers 18 am Ort der zu untersuchenden Stirnfläche 51 (siehe Fig. 2) ist vorteilhaft größer als der maximale Durchmesser d des zu untersuchenden Produkts, insbesondere größer als 10 mm. Es reicht dann aus, wenn die zu untersuchende Stirnfläche 51 des Produkts 50 in einer Abtastrichtung 37 relativ zu dem Lichtfächer 18 bewegt wird, um die zu untersuchende Stirnfläche 51 einschließlich der Kante 54 des Umhüllungsstreifens vollständig zu überstreichen. In Fig. 2 sind zu diesem Zweck 11 Abtastpositionen gezeigt, wobei an jeder Abtastposition eine Messkurve aufgezeichnet wird. In der Praxis ist die Zahl der Abtastpositionen pro Produkt 50 je nach gewünschter Messauflösung in der Regel wesentlich höher. Nach dem zuvor Gesagten ist der Sensor 13 zum Überstreichen der gesamten Kante 54 des Umhüllungsstreifens eingerichtet. Die Abtastpositionen können sich auch überlappen.

Im Vordergrund der Fig. 4 ist ein Messdiagramm zu sehen, das die auf dem Strahlungsdetektor 22 detektierte Linie 52 in der z-Richtung über der x-Richtung (siehe Fig. 1) bei fester y-Position wiedergibt (entsprechend einer Abtastposition in Fig. 2). Aufgrund der geometrischen Bedingungen gibt die unregelmäßige Kurve in Fig. 4 das Oberflächenprofil der Oberfläche 51 in dem der Linie 52 entsprechen Querschnitt quantitativ exakt wieder (Triangulation). Die Werte am rechten und linken Rand der unregelmäßigen Kurve in Fig. 4 an den mit x1 und x2 bezeichneten Positionen entsprechen der Papierkante 54 bzw. allgemeiner der Kante des Hüllmaterials des stabförmigen Produkts 50.

Die Stirnfläche 51 wird dann, wie zuvor beschrieben, relativ zu dem Sensor 13 schrittweise oder kontinuierlich verschoben und nach jedem Schritt wird eine separate Messkurve aufgenommen (jeweils entsprechend einer Abtastposition in Fig. 2). Dies wird in Fig. 4 durch fünf übereinandergelegte Messdiagrammen veranschaulicht, wobei in der Praxis die Zahl der pro stabförmigem Produkt aufgenommenen Messkurven wesentlich bzw. um ein Vielfaches höher ist, um eine gewünschte hohe Messauflösung in der y-Richtung zu erzielen. Die Zahl der pro stabförmigem Produkt aufgenommenen Messkurven (Zahl der Diagramme in Fig. 4) ist vorzugsweise so bemessen, dass sich eine einheitliche gewünschte Messauflösung in beiden Richtungen (x-und y-Richtung in Fig. 2) ergibt. Die Zahl der pro stabförmigem Produkt aufgenommenen Messkurven beträgt daher vorzugsweise mindestens 100, weiter vorzugsweise mindestens 500.

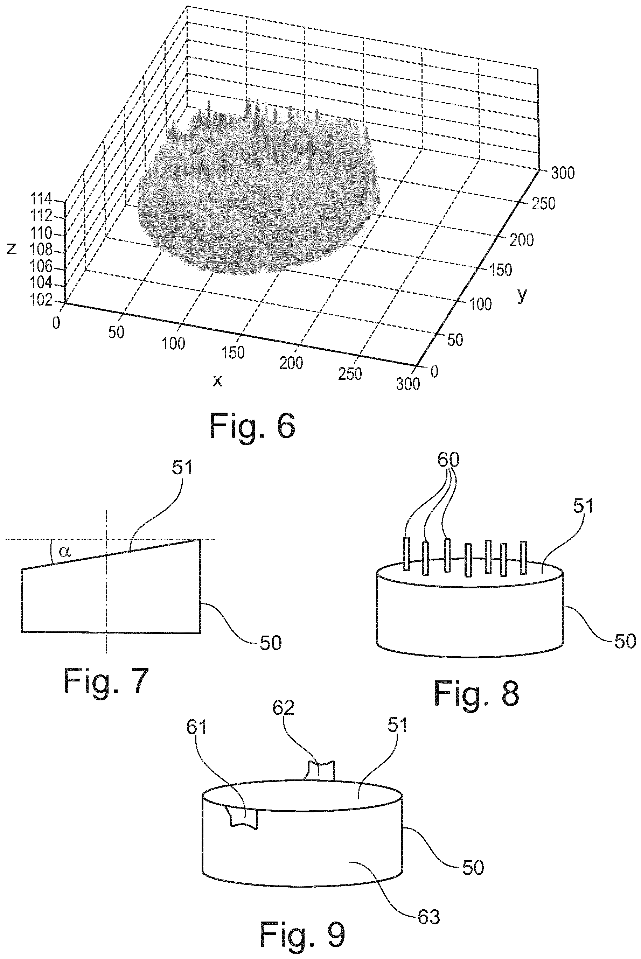

Auf die beschriebene Weise ergibt sich ein hochaufgelöstes, dreidimensionales Profil der gesamten stirnseitigen Oberfläche 51 des stabförmigen Produkts. Beispielsweise ist in Fig. 6 ein gemessenes dreidimensionales Profil eines Filterstabes in einer perspektivischen Ansicht gezeigt. Profil bedeutet, dass für jeden Messwert in x- und y-Richtung der gemessene relative Abstand der Oberfläche 51 in longitudinaler Richtung (z-Wert) angegeben wird. Es handelt sich somit um ein topographisches Profil der Stirnseite 51 mit dreidimensionalen Daten, das im Folgenden auch als Tiefenprofil bezeichnet wird. Aufgrund der Erfindung steht somit eine äußerst detaillierte, quantitative und dreidimensionale Oberflächeninformation mit beispielsweise 10^3 bis 10^6 oder mehr Datenpunkten pro Messung zur Verfügung.

Das in Fig. 6 gezeigte hochaufgelöste 3D-Profil wird in der Signalverarbeitungs- und Steuereinrichtung 24 ausgewertet, um eine hochgenauen quantitativen Bewertung der Stirnfläche 51 anhand eines oder mehrerer Qualitätskriterien zu erhalten. Die Signalverarbeitungs- und Steuereinrichtung 24 kann daher auch als Auswerteeinheit bezeichnet werden. Wichtige Qualitätskriterien sind beispielsweise der Winkel α der Stirnfläche 51 (siehe Figur 7), der positive oder negative Überstand von Fasern 60 des Füllmaterials des stabförmigen Produkts 50 über die Stirnfläche 51 (siehe Figur 8) und/oder die Feststellung von Papierausrissen 61 oder Fransen 62 in dem Hüllmaterial 63 des stabförmigen Produkts 50 (siehe Figur 9). Ein Auswerteverfahren wird im Folgenden anhand eines Filterstabes 50 im Detail beschrieben. Dies kann auf die Bewertung einer Stirnfläche eines Tabakstocks oder einer Zigarette sinngemäß übertragen werden.

Bei der Auswertung muss grundsätzlich beachtet werden, dass unterschiedliche Filtertypen wie Acetatfilter, Aktivkohlefilter, Rezessfilter, Tube-Filter etc. möglich sind. Information über die verschiedenen Filtertypen und daran angepasste Auswerteverfahren sind vorzugsweise in der Auswerteeinheit 24 gespeichert.

An den Rändern der stabförmigen Produkte 50 weisen die 3D-Profile häufig systematische Messfehler auf. Dies kann unterschiedliche Ursachen haben, beispielsweise eine durchscheinende Lichtquelle am Rand oder ein nicht exakt zum Sensor 13 ausgerichtetes Produkt 50. Es kann daher vorteilhaft sein, den Rand des 3D-Profils in der Auswertung nicht zu berücksichtigen. In diesem Fall wird der Rand des 3D-Profils vorzugsweise einfach vor der weiteren Auswertung aus dem Datensatz entfernt.

Insbesondere bei bevorzugter Verwendung eines Triangulationssensors 13 können abgeschattete Bereiche entstehen, in denen keine Tiefeninformation bzw. 3D-Information aufgenommen werden kann. Dies tritt beispielsweise bei Aktivkohle-, Rezess- oder Tube-Filtern auf. Die abgeschatteten Bereiche werden vorzugsweise vor der weiteren Auswertung anhand der umgebenden Tiefeninformation bzw. 3D-Information interpoliert.

Zur Ermittlung des Winkels der Stirnfläche 51 (siehe Figur 7) wird in der Auswerteeinheit 24 eine Ebene E an das gesamte Tiefenprofil angepasst ("gefittet"), beispielsweise in der Weise, dass der quadratische Fehler (die Summe der quadratischen Abweichungen der Ebene E von dem Tiefenprofil) minimal wird, oder auf andere geeignete Weise. Die angepasste Ebene E ist in Figur 5 für ein Tiefenprofil einer Stirnfläche 51 mit einem erheblichen Schiefschnitt angedeutet. Der Winkel α der Stirnfläche ergibt sich als der Winkel zwischen der Ebene E und einer Sollebene, die in der Regel senkrecht zu der Längsachse des stabförmigen Produkts 50 orientiert ist. Im Falle einer Stirnfläche 51 mit guter Qualität beträgt der Winkel α etwa 0°, siehe beispielsweise Figur 4.

Die Berücksichtigung der gesamten oder eines erheblichen Teils der Stirnfläche 51 des stabförmigen Produkts 50 für die Bestimmung des Winkel α ist wesentlich genauer als die Betrachtung nur der Stirnkante des Umhüllungsstreifens (Papier), da es aufgrund der Messfehler am Rand problematisch ist, das Umhüllungsmaterial von dem Füllmaterial (Tow oder Tabak) zu unterscheiden.

Ein weiteres wichtiges Kriterium zur Bewertung der Stirnfläche 51 betrifft vorstehende bzw. zurückgezogene Fasern des Füllmaterials des stabförmigen Produkts 50 über die Sollebene. Im stark vereinfachten Beispiel der Figur 8 sind nur überstehende Fasern (positiver Überstand in z-Richtung) gezeigt. Der positive bzw. negative Überstand einzelner Fasern, insbesondere Acetat- oder Tabakfasern, wird vorzugsweise relativ zu der angepassten Ebene E (siehe Figur 5) bestimmt. Zu diesem Zweck kann beispielsweise die Ebene E von dem gemessenen Tiefenprofil subtrahiert werden. Eine für die Qualitätsbewertung relevante Größe kann beispielsweise die Standardabweichung des Faserüberstands oder eine vergleichbare statistische Größe sein, und/oder die Anzahl der Fasern, die einen vorbestimmten Toleranzbereich über- bzw. unterschreiten. Der Toleranzbereich sollte dabei so gewählt sein, dass bei einem fehlerfreien Produkt 50 keine oder nur tolerierbar wenige Fasern außerhalb des Toleranzbereichs vorhanden sind.

Auch für die anderen betrachteten Kriterien ist es vorteilhaft, jeweils einen vordefinierten Toleranzbereich zu verwenden, in dem die Stirnfläche als "gut" bzw. "fehlerfrei" angesehen wird.

Um ausgerissenes Papier 61 oder Fransen 62 zu erkennen, die radial nach außen wegstehen, wird vorzugsweise eine Ellipse an den Rand des der Auswertung zugrundegelegten Profils angepasst bzw. "gefittet". Anschließend wird die maximale Entfernung der Kontur des Objekts 50 zu der Ellipse ermittelt. Sind Papierausrisse oder Fransen vorhanden, ist diese Entfernung größer als im Falle eines fehlerfreien Produkts. Auf diese Weise kann ebenfalls eine Einkerbung radial nach innen erkannt werden. Papierausrisse und Fransen, die axial nach innen oder nach außen ragen, werden von der Bewertung auf vorstehende Fasern erkannt, da diese sich ähnlich in dem Profil abbilden.

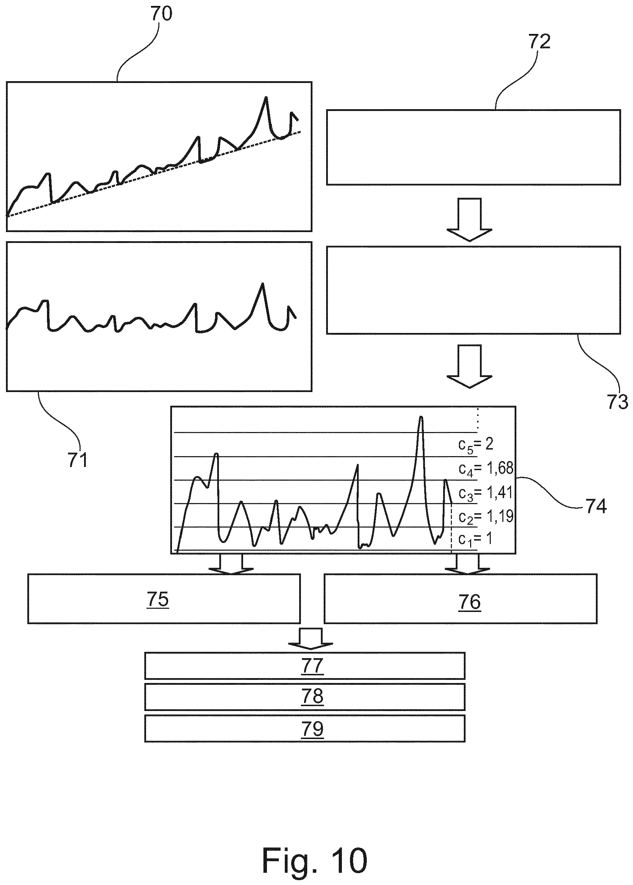

Alternativ oder zusätzlich zu dem Kriterium der überstehenden Fasern kann ein Rauhigkeitskennwert als Qualitätskriterium bestimmt werden. Ein bevorzugtes Verfahren zur Bestimmung des Rauhigkeitskennwerts wird im Folgenden anhand von Figur 10 erläutert. Das Diagramm 70 repräsentiert die von dem Sensor 13 aufgenommenen Rohdaten. In dem Schritt 72 wird die zuvor bestimmte Ebene E (siehe Figur 5) subtrahiert. Die resultierenden Daten, die im Diagramm 72 gezeigt sind, werden in dem Schritt 73 zu einem Nullpunkt einer Skala 74 verschoben, die in Zeilen mit vorbestimmten und in der Auswerteeinheit 24 gespeicherten Gewichtungsfaktoren cᵢ unterteilt ist. Sodann werden in dem Schritt 75 die Anzahl der überdeckten Rasterelemente (hinterlegt dargestellt) und in Schritt 76 die Anzahl der überdeckten Rasterelemente bei zusätzlicher Gewichtung mit den Gewichtungsfaktoren cᵢ bestimmt. Sodann wird in Schritt 77 der Quotient gebildet, das Ergebnis in Schritt 78 logarithmiert, um schließlich eine Qualitätszahl Q im Schritt 79 zu erhalten.

Zusätzlich zu den genannten und in den Figuren 7 bis 9 veranschaulichten Bewertungskriterien können weitere Kriterien aus dem gemessenen Tiefenprofil der Stirnfläche 51 ermittelt werden, insbesondere geometrische Größen des stabförmigen Produkts 50 wie beispielsweise Ovalität bzw. Exzentrizität, Umfang, Durchmesser, Fläche der Stirnseite etc. Dazu kann vorzugsweise die zuvor erwähnte, an den Rand des Tiefenprofils angepasste Ellipse verwendet werden. Die Ovalität der Stirnfläche 51 wird beispielsweise als Differenz zwischen dem maximalen Durchmesser dₘₐₓ und des minimalen Durchmessers dₘᵢₙ berechnet.

Eine Mehrzahl der zuvor beschriebenen Qualitätskriterien können in geeigneter Weise zu einer einheitlichen Qualitätszahl, oder zu einigen wenigen einheitlichen Qualitätszahlen, kombiniert werden. Dies kann beispielsweise für den Maschinenbediener übersichtlicher sein als eine Vielzahl von einzelnen Qualitätskriterien.

Fig. 3 illustriert die Erfindung für eine alternative Messvorrichtung mit einem eindimensionalen Wegmesssensor, der zur Erzeugung eines Lichtstrahls 56 eingerichtet ist. In Fig. 3 ist der Lichtstrahl 56 im Querschnitt am Ort der zu untersuchenden Stirnfläche 51 durch ein schraffiertes Rechteck illustriert. Der Lichtstrahl 56 erzeugt auf der zu untersuchenden Stirnfläche 51 einen entsprechenden Lichtfleck oder Lichtpunkt 57. Um die zu untersuchende Stirnfläche 51 einschließlich der Kante 54 des Umhüllungsstreifens 55 vollständig zu überstreichen, ist es in dieser Ausführungsform erforderlich, die zu untersuchende Stirnfläche 51 des Produkts 50 in zwei zueinander senkrechten Abtastrichtungen 58, 59 relativ zu dem Lichtstrahl 56 zu bewegen. Der Manipulator 27 müsste daher beispielsweise zweiachsig ausgeführt sein. In Fig. 3 sind 100 Abtastpositionen gezeigt, wobei an jeder Abtastposition ein Messwert aufgezeichnet wird. In der Praxis ist die Zahl der Abtastpositionen pro Produkt je nach gewünschter Messauflösung wesentlich höher.

In den vorangehenden Ausführungsbeispielen wurde ein Triangulationssensor 13 verwendet. Die Erläuterungen sind auf die alternative Verwendung eines 3D-Kamerasystems entsprechend übertragbar.

## Patentansprüche

1. Vorrichtung (10) zur Bewertung einer Stirnfläche (51) eines stabförmigen Produkts (50) der Tabak verarbeitenden Industrie, umfassend einen optischen Sensor (13) und eine elektronische Signalverarbeitungseinrichtung (24) zur Auswertung der von dem Sensor (13) aufgenommenen Messsignale, **dadurch gekennzeichnet, dass** der Sensor (13) zur dreidimensionalen Vermessung des Oberflächenprofils der gesamten Stirnfläche (51) des stabförmigen Produkts (50) eingerichtet ist, und die Signalverarbeitungseinrichtung (24) zur Ermittlung mindestens eines aus der folgenden Gruppe von Kriterien auf der Grundlage der Auswertung der von dem Sensor (13) ausgegebenen Messsignale eingerichtet ist:
- Winkel α der Stirnfläche (51);
- positiver / negativer Überstand von Fasern (60) relativ zu der Stirnfläche (51).

2. Vorrichtung nach Anspruch 1, **dadurch gekennzeichnet, dass** der Winkel α der Stirnfläche (51) als Neigung einer an das Oberflächenprofil des stabförmigen Produkts (50) angepassten Ebene E bestimmt wird.

3. Vorrichtung nach Anspruch 2, **dadurch gekennzeichnet, dass** der positive / negative Überstand von Fasern (60) relativ zu der an das Oberflächenprofil des stabförmigen Produkts (50) angepassten Ebene E bestimmt wird.

4. Vorrichtung nach einem der vorangehenden Ansprüche, **dadurch gekennzeichnet, dass** die Signalverarbeitungseinrichtung (24) zur Bewertung des folgenden Kriteriums auf der Grundlage des von dem Sensor (13) ausgegebenen Messsignals eingerichtet ist:
- Ausrisse (61) oder Fransen (62) eines Umhüllungsstreifens (63) des stabförmigen Produkts (50).

5. Vorrichtung nach einem der vorangehenden Ansprüche, **dadurch gekennzeichnet, dass** die Signalverarbeitungseinrichtung (24) zur Bewertung des folgenden Kriteriums auf der Grundlage des von dem Sensor (13) ausgegebenen Messsignals eingerichtet ist:
- Rauhigkeitskennwert der Stirnfläche (51).

6. Vorrichtung nach einem der vorangehenden Ansprüche, **dadurch gekennzeichnet, dass** die Signalverarbeitungseinrichtung (24) zur Ermittlung des folgenden Kriteriums auf der Grundlage des von dem Sensor (13) ausgegebenen Messsignals eingerichtet ist:
- Ovalität des Umfangs der Stirnfläche (51).

7. Vorrichtung nach einem der vorangehenden Ansprüche, **dadurch gekennzeichnet, dass** der Sensor (13) ein optischer Wegmesssensor ist, der zur Überstreichung der gesamten zu untersuchenden Stirnfläche (51) des stabförmigen Produkts (50) eingerichtet ist.

8. Vorrichtung nach einem der vorangehenden Ansprüche, **dadurch gekennzeichnet, dass** der Sensor (13) ein zweidimensionaler optischer Wegmesssensor ist, wobei die Strahlungsquelle (15, 17) zur Erzeugung eines Strahlungsfächers (18) eingerichtet ist, um eine linienförmige Abtastung (52) der Stirnfläche (51) des stabförmigen Produkts (50) durchzuführen, und wobei zur flächigen Abtastung der Stirnfläche (51) des stabförmigen Produkts (50) der Wegmesssensor (13) und die Stirnseite (51) des stabförmigen Produkts (50) relativ zueinander bewegbar sind.

9. Vorrichtung nach Anspruch 8, **dadurch gekennzeichnet, dass** die Ausdehnung b des Strahlungsfächers (18) am Ort der zu untersuchenden Stirnfläche (51) größer ist als der größte Durchmesser d der zu untersuchenden Stirnfläche (51).

10. Vorrichtung nach einem der Ansprüche 1 bis 7, **dadurch gekennzeichnet, dass** der Sensor (13) ein eindimensionaler optischer Wegmesssensor ist, wobei die Strahlungsquelle (15) zur Erzeugung eines Lichtstrahls eingerichtet ist, um eine punktförmige Abtastung der Stirnfläche (51) des stabförmigen Produkts (50) durchzuführen, und wobei zur flächigen Abtastung der Stirnfläche (51) des stabförmigen Produkts (50) der Wegmesssensor (13) und die Stirnseite (51) des stabförmigen Produkts (50) in zwei zueinander senkrechten Richtungen relativ zueinander bewegbar sind.

11. Vorrichtung nach einem der vorangehenden Ansprüche, **dadurch gekennzeichnet, dass** der Sensor (13) eine 3D-fähige Kamera umfasst.

12. Vorrichtung nach einem der vorangehenden Ansprüche, **dadurch gekennzeichnet, dass** die Vorrichtung einen Manipulator (27) und/oder ein Handhabungsmittel und/oder ein Fördermittel zur Bewegung des stabförmigen Produkts (50) relativ zu dem Sensor (13) während der Messung umfasst.

13. Maschine der Tabak verarbeitenden Industrie, **dadurch gekennzeichnet, dass** die Maschine eine Vorrichtung nach einem der vorangehenden Ansprüche umfasst.

14. Verfahren zur Bewertung einer Stirnfläche (51) eines stabförmigen Produkts (50) der Tabak verarbeitenden Industrie, umfassend eine Auswertung der von einem optischen Sensor (13) aufgenommenen Messsignale in einer elektronischen Signalverarbeitungseinrichtung (24), **gekennzeichnet durch** dreidimensionale Vermessung des Oberflächenprofils der gesamten Stirnfläche (51) des stabförmigen Produkts (50) mittels des optischen Sensors (13), wobei mindestens eines aus der folgenden Gruppe von Kriterien auf der Grundlage der Auswertung der von dem Sensor (13) ausgegebenen Messsignale in der elektronischen Signalverarbeitungseinrichtung (24) ermittelt wird:
- Winkel α der Stirnfläche (51);
- positiver / negativer Überstand von Fasern (60) relativ zu der Stirnfläche (51).

15. Verfahren nach Anspruch 14, **dadurch gekennzeichnet, dass** für einzelne Kriterien jeweils ein vordefinierter Toleranzbereich betrachtet wird, in dem die Stirnfläche (51) als "gut" bzw. "fehlerfrei" angesehen wird, wobei eine vorzugsweise parametrisierbare Obergrenze zₘₐₓ und eine vorzugsweise parametrisierbare Untergrenze zₘᵢₙ definierbar sind und wobei ein Fehlersignal erzeugt wird, wenn der ermittelte Wert außerhalb des Toleranzbereiches liegt.

16. Verfahren nach Anspruch 14 oder 15, **dadurch gekennzeichnet, dass** bei einer Abweichung des Winkels α der Stirnfläche (51) von vorzugsweise parametrisierbaren Grenzwerten ein Fehlersignal generiert wird.

## Claims

1. Device (10) for the assessment of a front face (51) of a rod-shaped product (50) of the tobacco processing industry, including an optical sensor (13) and an electronic signal processing device (24) for evaluating the measuring signals collected by the sensor (13), **characterized in that** the sensor (13) is configured for 3-dimensional measurement of the surface profile of the whole front face (51) of the rod-shaped product (50), and the signal processing device (24) is configured for the identification of at least one criterion of the following group of criteria on the basis of the evaluation of the measuring signals output by the sensor (13):
- angle α of the front face (51);
- positive / negative excess length of fibres (60) relative to the front face (51).

2. Device according to claim 1, **characterized in that** the angle α of the front face (51) is determined as inclination of a plane E fitted to the surface profile of the rod-shaped product (50).

3. Device according to claim 2, **characterized in that** the positive / negative excess length of fibres (60) is determined relative to the plane E fitted to the surface profile of the rod-shaped product (50).

4. Device according to any one of the preceding claims, **characterized in that** the signal processing device (24) is configured for the evaluation of the following criterion on the basis of the measuring signal output by the sensor (13) :
- tear outs (61) or fringes (62) of a wrapping strip (63) of the rod-shaped product (50).

5. Device according to any one of the preceding claims, **characterized in that** the signal processing device (24) is configured for the evaluation of the following criterion on the basis of the measuring signal output by the sensor (13) :
- roughness characteristic of the front face (51).

6. Device according to any one of the preceding claims, **characterized in that** the signal processing device (24) is configured for the evaluation of the following criterion on the basis of the measuring signal output by the sensor (13) :
- ovality of the circumference of the front face (51).

7. Device according to any one of the preceding claims, **characterized in that** the sensor (13) is an optical distance measurement sensor which is configured for scanning the whole front face (51) to be examined of the rod-shaped product (50).

8. Device according to any one of the preceding claims, **characterized in that** the sensor (13) is a 2-dimensional optical distance measurement sensor, wherein the radiation source (15, 17) is configured for generating a radiation fan (18) to perform a linear scan (52) of the front face (51) of the rod-shaped product (50), and wherein the distance measurement sensor (13) and the front face (51) of the rod-shaped product (50) can be moved relative to each other to perform a complete surface scan of the front face (51) of the rod-shaped product (50).

9. Device according to claim 8, **characterized in that** the extension b of the radiation fan (18) at the point of the front face (51) to be examined is larger than the largest diameter d of the front face (51) to be examined.

10. Device according to one of claims 1 to 7, **characterized in that** the sensor (13) is a 1-dimensional optical distance measurement sensor, wherein the radiation source (15) is configured for generating a light beam to perform a punctiform scan of the front face (51) of the rod-shaped product (50), and wherein the distance measurement sensor (13) and the front face (51) of the rod-shaped product (50) can be moved relative to each other in two directions perpendicular to each other to perform a complete surface scan of the front face (51) of the rod-shaped product (50).

11. Device according to any one of the preceding claims, **characterized in that** the sensor (13) includes a 3-D-capable camera.

12. Device according to any one of the preceding claims, **characterized in that** the device includes a manipulator (27) and/or a handling means and/or a conveying means for displacing the rod-shaped product (50) relative to the sensor (13) during the measurement.

13. Apparatus of the tobacco processing industry, **characterized in that** the apparatus includes a device according to any one of the preceding claims.

14. Method for the assessment of a front face (51) of a rod-shaped product (50) of the tobacco processing industry, including evaluation of the measuring signals detected by an optical sensor (13) in an electronic signal processing device (24), **characterized by** 3-dimensional measurement of the surface profile of the whole front face (51) of the rod-shaped product (50) by the optical sensor (13), wherein at least one criterion of the following group of criteria is identified in the electronic signal processing device (24) on the basis of the evaluation of the measuring signals output by the sensor (13):
- angle α of the front face (51);
- positive / negative excess length of fibres (60) relative to the front face (51).

15. Method according to claim 14, **characterized in that** a predefined tolerance range is considered for each individual criterion in which the front face (51) is regarded as "good" or "defect-free", wherein a preferably parameterizable upper limit Zₘₐₓ and a preferably parameterizable lower limit Zₘᵢₙ can be defined and wherein an error signal is generated if the determined value lies beyond the tolerance range.

16. Method according to claim 14 or 15, **characterized in that** an error signal is generated if the angle α of the front face (51) deviates from preferably parameterizable threshold values.

## Revendications

1. Dispositif (10) d'évaluation d'une surface frontale (51) d'un produit en forme de tige (50) de l'industrie de traitement du tabac, comprenant un capteur optique (13) et un moyen électronique de traitement de signal (24) destiné à évaluer les signaux de mesure récus par le capteur (13), **caractérisé en ce que** le capteur (13) est configuré pour la mesure tridimensionnelle du profil de surface de l'ensemble de la surface frontale (51) du produit en forme de tige (50), et le moyen de traitement de signal (24) est configuré pour déterminer au moins un critère parmi le groupe de critères suivant sur la base de l'évaluation des signaux de mesure émis par le capteur (13) :
- angle α de la surface frontale (51) ;
- dépassement positif/négatif de fibres (60) par rapport à la surface frontale (51).

2. Dispositif selon la revendication 1, **caractérisé en ce que** l'angle α de la surface frontale (51) est déterminé comme inclinaison d'un plan E adapté au profil de surface du produit en forme de tige (50).

3. Dispositif selon la revendication 2, **caractérisé en ce que** le dépassement positif/négatif de fibres (60) est déterminé par rapport au plan E adapté au profil de surface du produit en forme de tige (50).

4. Dispositif selon l'une des revendications précédentes, **caractérisé en ce que** le moyen de traitement de signal (24) est configurée pour évaluer le critère suivant sur la base du signal de mesure émis par le capteur (13) :
- déchirures (61) ou franges (62) d'une bande d'enveloppement (63) du produit en forme de tige (50).

5. Dispositif selon l'une des revendications précédentes, **caractérisé en ce que** le moyen de traitement de signal (24) est configuré pour évaluer le critère suivant sur la base du signal de mesure émis par le capteur (13) :
- caractéristique de rugosité de la surface frontale (51).

6. Dispositif selon l'une des revendications précédentes, **caractérisé en ce que** le moyen de traitement de signal (24) est configuré pour déterminer le critère suivant sur la base du signal de mesure émis par le capteur (13) :
- ovalité de la circonférence de la surface frontale (51).

7. Dispositif selon l'une des revendications précédentes, **caractérisé en ce que** le capteur (13) est un capteur optique de mesure de déplacement, qui est configuré pour balayer l'ensemble de la surface frontale (51) à examiner du produit en forme de tige (50).

8. Dispositif selon l'une des revendications précédentes, **caractérisé en ce que** le capteur (13) est un capteur optique de mesure de déplacement bidimensionnelle, la source de rayonnement (15, 17) étant configurée pour générer un éventail de rayonnement (18) afin d'effectuer un balayage (52) linéaire de la surface frontale (51) du produit en forme de tige (50), et le capteur de mesure de déplacement (13) et la face frontale (51) du produit en forme de tige (50) pouvant se déplacer l'un par rapport à l'autre pour le balayage surfacique de la surface frontale (51) du produit en forme de tige (50).

9. Dispositif selon la revendication 8, **caractérisé en ce que** l'étendue b de l'éventail de rayonnement (18), à l'emplacement de la surface frontale (51) à examiner, est supérieure au diamètre maximal d de la surface frontale (51) à examiner.

10. Dispositif selon l'une des revendications 1 à 7, **caractérisé en ce que** le capteur (13) est un capteur optique de mesure de déplacement unidimensionnelle, la source de rayonnement (15) étant configurée pour générer un rayon lumineux afin d'effectuer un balayage par points de la surface frontale (51) du produit en forme de tige (50), et le capteur de mesure de déplacement (13) et la face frontale (51) du produit en forme de tige (50) pouvant se déplacer l'un par rapport à l'autre dans deux directions perpendiculaires entre elles pour le balayage surfacique de la surface frontale (51) du produit en forme de tige (50).

11. Dispositif selon l'une des revendications précédentes, **caractérisé en ce que** le capteur (13) comprend une caméra apte à la 3D.

12. Dispositif selon l'une des revendications précédentes, **caractérisé en ce que** le dispositif comprend un manipulateur (27) et/ou un moyen de maniement et/ou un moyen de transport pour le déplacement du produit en forme de tige (50) par rapport au capteur (13) pendant la mesure.

13. Machine de l'industrie de traitement du tabac, **caractérisée en ce que** la machine comprend un dispositif selon l'une des revendications précédentes.

14. Procédé d'évaluation d'une surface frontale (51) d'un produit en forme de tige (50) de l'industrie de traitement du tabac, comprenant une évaluation des signaux de mesure récus par un capteur optique (13) dans un moyen électronique de traitement de signal (24), **caractérisé par** la mesure tridimensionnelle du profil de surface de l'ensemble de la surface frontale (51) du produit en forme de tige (50) au moyen du capteur optique (13), au moins un critère du groupe de critères suivant étant déterminé sur la base de l'évaluation des signaux de mesure émis par le capteur (13) dans le moyen de traitement de signal (24) :
- angle α de la surface frontale (51) ;
- dépassement positif/négatif de fibres (60) par rapport à la surface frontale (51).

15. Procédé selon la revendication 14, **caractérisé en ce que**, pour des critères individuels, respectivement une plage de tolérance prédéfinie est prise en compte, dans laquelle la surface frontale (51) est considérée comme « bonne » ou « sans erreur », une limite supérieure zₘₐₓ de préférence paramétrisable et une limite inférieure zₘᵢₙ de préférence paramétrisable pouvant être définies et un signal d'erreur étant généré lorsque la valeur déterminée se trouve hors de la plage de tolérance.

16. Procédé selon la revendication 14 ou 15, **caractérisé en ce que**, en cas d'écart entre l'angle α de la surface frontale (51) et des valeurs limites de préférence paramétrisables, un signal d'erreur est généré.
